(19) Europäisches Patentamt / European Patent Office / Office européen des brevets

(11) **EP 2 098 384 B1**

(12) **EUROPÄISCHE PATENTSCHRIFT**

(45) Veröffentlichungstag und Bekanntmachung des Hinweises auf die Patenterteilung:
**25.05.2011 Patentblatt 2011/21**

(51) Int Cl.:
*B60C 1/00* (2006.01)     *C08K 3/36* (2006.01)
*C08L 9/06* (2006.01)

(21) Anmeldenummer: **09151396.0**

(22) Anmeldetag: **27.01.2009**

(54) **Kautschukmischung und daraus hergestellte Reifen**

Rubber mixture and tyres made from same

Mélange de caoutchouc et pneu ainsi fabriqué

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **29.02.2008 DE 102008011917**

(43) Veröffentlichungstag der Anmeldung:
**09.09.2009 Patentblatt 2009/37**

(73) Patentinhaber: **Continental Reifen Deutschland GmbH**
**30165 Hannover (DE)**

(72) Erfinder:
• **Weinreich, Hajo**
**31840, Hessisch Oldendorf (DE)**
• **Wagemann, Jürgen**
**31162, Bad Salzdetfurth (DE)**

(74) Vertreter: **Finger, Karsten et al**
**Continental Aktiengesellschaft**
**Patente und Lizenzen**
**Postfach 1 69**
**30001 Hannover (DE)**

(56) Entgegenhaltungen:
**EP-A- 0 890 587      EP-A- 1 334 985**
**EP-A- 1 457 501      EP-A- 1 792 892**
**EP-A- 1 834 966      EP-A- 1 837 370**
**EP-A- 1 854 839      WO-A-2007/032209**
**WO-A-2007/134895   US-A1- 2004 054 062**

Bemerkungen:
Die Akte enthält technische Angaben, die nach dem Eingang der Anmeldung eingereicht wurden und die nicht in dieser Patentschrift enthalten sind.

**Beschreibung**

Die Erfindung stellt vernetzbare Kautschukmischungen, insbesondere für Reifen und Laufstreifen von Reifen, enthaltend zumindest 80 bis 100 phr funktionalisiertem SSBR- und/oder ESBR-Dienkautschuk, gegebenenfalls einen oder mehrere weitere polare oder unpolare Kautschuk und wenigstens ein flüssiges Polymer und zumindest einem polaren Füllstoff bereit. Die Erfindung richtet sich ferner auf Laufstreifen und Reifen diese vulkanisierten Kautschukmischungen zumindest teilweise enthaltend. Schließlich richtet sich die vorliegende Erfindung auf technische Gummiartikel, die zumindest zum Teil aus der vulkanisierten Kautschukmischung bestehen.

**Technischer Hintergrund**

Die Eigenschaften von Reifen, insbesondere von Fahrzeugluftreifen sind in einem großen Umfang von der im Reifen und insbesondere im Laufstreifen des Reifens verwendeten Kautschukzusammensetzungen abhängig. Hier werden hohe Anforderungen an die Zusammensetzung der Laufstreifen gestellt. Insbesondere für Reifen im Pkw-Bereich müssen unterschiedlichste Anforderungen an den Reifen erfüllt werden, je nach Einsatzgebiet des Reifens. Vor allem bei Ganzjahresreifen müssen diese sowohl eine hervorragende Winterperformance als auch gute Hochtemperaturrelevante Eigenschaften, wie Trockenbremsen oder Handling, aufweisen. D.h. bei hohen Temperaturen muss eine genügende Steifigkeit des Reifens gewährleistet werden, die sogenannte Hochtemperatursteifigkeit. Andererseits muss eine hervorragende Tieftemperaturflexibilität vorliegen, um eine hervorragenden Winterperformance z.B. beim Nassbremsen und dem Warm-up-Verhalten zu erzielen. Durch die Einführung der Silika-Technologie werden in der Reifenindustrie Styrol-Butadien-Kautschuke (SBR) in großem Umfang eingesetzt. Diese Styrol-Butadien-Kautschuke können z.B. als lösungspolymerisierte Styrol-Butadien-Kautschuke (SSBR) oder e-mulsionspolymerisierte Styrol-Butadien-Kautschuke (ESBR) eingesetzt werden. Gerade der Einsatz von SSBR in Reifen und insbesondere Laufstreifen ist in der Reifenindustrie weit verbreitet.

Während aktuell in Winterreifen ein Gehalt von kleiner 55 phr SSBR in Kombination mit Silika als Füllstoffe eingesetzt werden, finden in Sommerreifen, wo ein verbessertes Trockenbremsen und Handling gewünscht ist, SSBR mit Gehalten von 50 bis 80 phr Anwendung.

Allerdings ist dieser Einsatz der SSBRs limitiert, da mit hohen SSBR-Gehalten,wie sie beispielsweise in US2004/0054062A1 Erwähnung finden, die dynamische Steifigkeit der vulkanisierten Kautschukmischungen, wie der Laufstreifen zunimmt. Dieses bedeutet zwar eine Verbesserung der Hochtemperatur-relevanten Eigenschaften, wie Trockenbremsen oder Handling. Allerdings verringert sich bei Einsatz von hohen Mengen an SSBR die Tieftemperaturflexibilität. Dieses führt zu einer Verschlechterung der Winterperformance und des Warm-up-Verhaltens wie auch des Nassbremsverhaltens und des Abriebs.

So konnten zwar durch den Einsatz von Silika in Form von Siliziumoxid-basierten Füllstoffen, wie Silika und Kieselsäure, die Fahreigenschaften in den vergangenen Jahren insgesamt auf ein höheres Niveau gebracht werden. Allerdings konnte der oben aufgeführte Zielkonflikt zwischen Winterperformance, Abrieb und Handling auch bei kieselsäurehaltigen Laufstreifenmischungen nicht gelöst werden. Üblicherweise zieht eine Verbesserung des Nassgriffs und des Trockenbremsens weiterhin in der Regel eine Verschlechterung des Rollwiderstandes, der Wintereigenschaften und des Abriebsverhaltens nach sich.

So wurden unterschiedlichste Möglichkeiten untersucht, diesen Zielkonflikt zu lösen. Durch Zusetzen von z.B. modifiziertem Polymeren, Harzen, Weichmachern und hochdispersen Füllstoffen wurde versucht, die Vulkanisationseigenschaften und somit sowohl Wintereigenschaften und Abriebverhalten als auch die Verbesserung des Handlings und Trockenbremsverhaltens zu beeinflussen.

Zum Beispiel sind aus der EP 1 052 270, DE 380 49 08 oder EP 1 529 806 die Zumischung von flüssigen Polymeren bekannt. Die EP 1 035 164 beschreibt die Zugabe von flüssigem Polybutadien mit hohem Vinylgehalt für Reifenlaufstreifen als Ersatz für herkömmliche Weichmacheröle. Die Verwendung von herkömmlichen Weichmacherölen, wie beispielsweise Mineralöle oder aromatische Prozessöle ("extender oils"), werden in EP1837370A bzw. EP1457501A beschrieben.

Die Verwendung von flüssigen Polybutadienen wirkt sich allerdings negativ auf z.B. das Trockenbremsverhalten der Reifen aus. Die Verwendung von flüssigem Styrolbutadienkautschuk wird in EP1854839A und WO2007/0322 beschrieben. Durch den Einsatz eines flüssigen Styrolbutadienkautschuks ergibt sich im Wesentlichen eine verbesserte Füllstoffdispersion, verbesserte Verarbeitbarkeit, Brucheigenschaften und Abriebbeständigkeit.

Es ist bekannt, SSBRs bzw. ESBRs zu funktionalisieren. So beschreibt die EP 763 564 Expoxidierungen von entsprechenden Copolymeren. Entsprechende Verfahren zur Expoxidierungen sind aus dem Stand der Technik bekannt. Eine Funktionalisierung von SSBRs führte zu positiven Veränderungen im Rollwiderstands- und Abriebsverhalten oder aber auch im Handling auf trockener Strasse, wie es vor allem für die Anwendung in Sommerreifen relevant ist. Funktionalisierte Polymere bzw. deren Verwendung in Kautschukmischungen für Reifen werden ebenso in WO2007/134895A, EP1334985A, EP0890587A, EP1834966A und EP1792892A beschrieben.

Der vorliegenden Erfindung liegt nun die Aufgabe zugrunde, Kautschukmischungen insbesondere für Laufstreifen von Reifen und Reifen, die sowohl eine gute Winterperformance, Nassbrems-Verhalten und Abrieb aufweisen als auch die geforderten Eigenschaften auf dem Gebiet des Trockenbremsens und Handlings aufzeigen, bereitzustellen.

**Beschreibung der Erfindung**

Gelöst wird die Aufgabe erfindungsgemäß dadurch, dass die Kautschukmischung zumindest 80 bis 100 phr funktionalisierten SSBR und/oder ESBR Dienkautschuk, 0 bis 20 phr weiteren polaren oder unpolaren Kautschuk und wenigstens ein flüssiges Polymer und zumindest einen polaren Füllstoff enthält.

Überraschenderweise zeigte sich, dass durch Funktionalisierung von SSBR und ESBR, insbesondere durch polare Funktionalisierung dieser SBR, die bei Verwendung von großen Mengen an SSBR in Kombination mit flüssigem Polymer die bekannten nachteiligen Eigenschaften überwunden werden konnten und der technische Widerspruch bzw. der Zielkonflikt zwischen Hochtemperaturstreifigkeit und Tieftemperaturflexibilität zumindest teilweise gelöst werden konnte.

Die Funktionalisierung der SBRs, sowohl SSBR als auch ESBR, hat einen positiven Einfluss auf das Rollwiderstand- und Abriebverhalten. Des Weiteren ermöglicht die Funktionalisierung aber auch den bisher auf die Winterperformance und Nassbrems-verhalten negativen Einflüssen von hohen SBR-Gehalten, zu reduzieren bzw. sogar diese Eigenschaften zu verbessern.

Erfindungsgemäße Laufstreifen und Reifen mit erfindungsgemäßen Kautschukmischungen zeigen eine herausragende Gesamtperformance in den zentralen Reifeneigenschaften, nämlich der Winterperformance, Trockenbremseigenschaften, Handling, Nassbremseigenschaften, Rollwiderstand und Abrieb.

Gegenüber Reifen mit unfunktionalisiertem SSBR konnte bei gleich bleibender Winterperformance ein verbessertes Trockenbremsen, ein verbessertes Handling, ein verbessertes Nassbremsen, ein verbesserter Rollwiderstand und ein verbesserter Abrieb erreicht werden. Diese Reifen zeigen somit sowohl eine verbesserte Tieftemperaturflexibilität als auch verbesserte Hochtemperatursteifigkeit auf.

In einem weiteren Aspekt betrifft die vorliegende Erfindung somit Laufstreifen für Reifen enthaltend zumindest zum Teil eine erfindungsgemäße vulkanisierte Kautschukmischung sowie entsprechende Reifen aus zumindest teilweise erfindungsgemäßer vulkanisierter Kautschukmischung.

Die in einem weiteren Aspekt bereitgestellten Laufstreifen enthaltend zumindest zum Teil eine erfindungsgemäße vulkanisierte Kautschukmischung bzw. Reifen, der zumindest zum Teil aus einer erfindungsgemäßen vulkanisierten Kautschukmischung besteht, sind insbesondere als Winterreifen oder Ganzjahresreifen geeignet.

Die erfindungsgemäße Kautschukmischung ist dabei nicht nur in Laufstreifen, sondern auch im Körper der Reifen einsetzbar. Schließlich richtet sich in einer weiteren Ausführungsform die vorliegende Erfindung auf andere technische Gummiartikel, wie Gurte und Riemen, insbesondere Zahnriemen, Keilriemen, Zahnrückriemen, Flachriemen und Fördergurte und bei den genannten Artikeln insbesondere die Laufseiten davon, die zumindest zum Teil eine erfindungsgemäße vulkanisierte Kautschukmischung enthalten. Diese weiteren technischen Gummiartikel zeigen sich ebenfalls durch eine gute Stabilität bei hoher Temperatur aber auch eine hervorragende Tiefentemperaturflexibilität aus.

In einer bevorzugten Ausführungsform weisen die SSBR oder ESBR einen Styrolanteil von 10 bis 50 Gew.-%, bevorzugt 15 bis 40 Gew.-% auf und/oder einen Vinylgehalt von 10 bis 80 Gew.-% jeweils bezogen auf das gesamte Polymer. Solche lösungspoiymierisierten Styrol-Butadien-Kautschuke können z.B. unter Verwendung von Lithiumalkylen in organischem Lösungsmittel hergestellt werden. Die SSBR oder ESBR können neben der polar-funktionalisierten Modifikation auch end-gekoppelt und in Gruppen modifiziert sein. Die emulsionspolymerisierten Styrol-Butadien-Kautschuke können ebenfalls nach bekannten Verfahren hergestellt werden. Es können die aus dem Stand der Technik bekannten Typen, die durch Copolymerisation von Styrol und 1,3-Butadien in wässriger Emulsion erhalten werden, verwendet werden. In einer bevorzugten Ausführungsform werden Mischungen aus SSBR und/oder ESBR eingesetzt.

Alternativ kann die erfindungsgemäße Kautschukmischung auch eine Kautschukmischung aus 80 bis 100 phr funktionalisiertem BR mit einem Vinylanteil von < 90 Gew.-%, insbesondere einen Vinylanteil von 40 bis 85 Gew.-%, 0 bis 20 phr mindestens eines weiteren Kautschuks und zumindest einem polarem Füllstoff sein.

Auch bei der Verwendung von funktionalisierten Hoch-vinyl BR, die einen ähnlichen Glasübergangspunkt aufweisen wie SSBR, treten die bereits eingangs für SSBR beschriebenen Nachteile auf.

Der in der Kautschukmischung weiterhin vorhandene Kautschuk ist ein üblicher polarer und unpolarer Kautschuk. D.h. die vulkanisierbare Kautschukmischung kann als weitere polare oder unpolare Kautschukkomponente alle dem Fachmann bekannten Kautschuktypen enthalten, wie z.B. Naturkautschuk, synthetisches Polyisopren, Polybutadien, Butylkautschuk, Ethylen-Propylen-Dienkautschuk, Ethylen-Propylen-Dienkautschuk, Halobutylkautschuk, Chloroprenkautschuk, Isopren-Butadien-Kautschuk und/oder Styrol-Isopren-Butadien-Terpolymer, aber auch solche mit polaren Gruppen, wie z.B. Acrylnitril-Butadien-Kautschuk, hydrierter Acrylnitril-Butadien-Kautschuk, hydrierter Acrylnitril-Butadien-Kautschuk mit Seitengruppen für verbesserte Kälteflexibilität, carboxylierter Acrylnitril-Butadien-Kautschuke, Styrol-Butadien-Copolymere und Propfpolymer mit weiteren ungesättigten polaren Monomeren, Silikonkautschuk, Ethylen-Vinylacetat-Kautschuk, Ethylen-Acryl-Elastomere, Kautschuke mit Halogenatom, wie Fluorkautschuk, Epichtohydrinkautschuk, alkyllertes Chlorsulfoniertes Polyethylen, chlorsulfoniertes Polyethylen, chloriertes Polyethylen usw.

In einer bevorzugten Ausführungsform sind die weiteren Kautschuke Naturkautschuke (NR), synthetisches Polyisopren (ER), Polybutadien (BR), Propylen-Ethylen-Kautschuk (PE), Ethylen-Propylen-Dien-Kautschuk (EPDM), Halobutylkautschuk (HBR), Chloroprenkautschuk (CR), Isopren-Butadien-Kautschuk (IBR) und/oder Styro-Isopren-Butadien-Terpolymer.

Erfindungsgemäß weisen die SSBR und ESBR Dienkautschuke Funktionalisierungen auf. Bevorzugt sind diese Funktionalisierungen solche mit einer polaren oder polar-reaktiven Gruppe. Insbesondere handelt es sich bei den Funktionalisierungen um Funktionalisierungen mit Hydroxylgruppen und/oder Epoxidgruppen und/oder Siloxangruppen und/oder Aminogruppen und/oder Aminosiloxangruppen und/oder Carboxylgruppen und/oder Phthalocyanin. Es kommen aber auch noch weitere, dem Fachmann bekannte, Funktionalisierungen in Frage.

Die Funktionalisierungen können sowohl am Kettenende als auch in der Kette vorliegen.

Zum Beispiel kann eine Funktionalisierung mittels eines funktionalisierten Starters und/oder Kettenabbruch eingebracht werden. Geeignete Verfahren und Gruppen sind aus dem Stand der Technik bekannt. Die Funktionalisierung kann die hohe Bindungskraft zwischen Kautschuk und Füllstoff verbessern.

Wie ausgeführt können die SSBR und/oder ESBR in Anteil von 80 bis 100 phr vorliegen, während die weiteren polaren oder unpolaren Kautschuke in Mengen von 0 bis 20 phr in der Kautschukmischung vorhanden sind.

Die in dieser Schrift verwendete Angabe phr (part of rubber by weight) ist die in der Kautschukindustrie übliche Mengenangabe für Mischungsrezepturen. Diese Dosierung der Gewichtsteile der einzelnen Substanzen wird dabei stets auf 100 Gewichtsteile der gesamten Masse aller in der Mischung vorhandenen Kautschuke bezogen.

Sowohl SSBR und ESBR als auch die weiteren polaren und unpolaren Kautschuke können auch als Mischungen vorliegen.

Weiterhin enthält die Kautschukmischung einen polaren Füllstoff. Als polare Füllstoffe können aller dem Fachmann bekannten Füllstoffe, wie Aluminiumhydroxid und Schichtsilikate verwendet werden. Bevorzugt wird als polarer Füllstoff jedoch Siliziumoxid-basierte Füllstoffe, wie Silika und Kieselsäure eingesetzt.

Bevorzugt wird insbesondere als polarer Füllstoff Kieselsäure verwendet, geeignete siliziumbasierte Füllstoffe, insbesondere Kieselsäuren sind im Stand der Technik bekannt.

Bevorzugt werden die polaren Füllstoffe in einer Menge von 0,1 phr bis 160 phr eingesetzt.

Erfindungsgemäß können aber auch weitere Füllstoffe, wie insbesondere Ruß eingesetzt werden. Ruß wird dabei bevorzugt in einer Menge von 0,1 phr bis 80 phr eingesetzt. Die verwendeten Ruße sind Ruße, wie sie allgemein in Kautschukmischungen eingesetzt werden. Bevorzugt weisen die Ruße dabei die folgenden Charakteristika auf: DBP-Zahl (gemäß ASTM D2414) 90 bis 200 ml/100 g, CTAB-Zahl (gemäß ASTM D3765) 80 bis 170 $m^2$ und Iodabsorptionszahl (gemäß ASTM D1510) 10 bis 250 g/kg.

Bevorzugte Kieselsäuren sind fein verteilte, gefällte Kieselsäuren, die z.B. eine Stlckstoffoberfläche (BET-Oberfläche) (gemäß DIN 66131 und 66132) von 35 bis 350 $m^2$, vorzugsweise von 115 bis 230 $m^2$ und eine CTAB-Oberfläche (gemäß ASTM D3765) von 30 bis 350 $m^2$, vorzugsweise von 120 bis 285 $m^2$ aufweisen.

Derartige Kieselsäuren führen z.B. in Kautschukmischungen für Reifenlaufstreifen zu besonders guten physikalischen Eigenschaften der Vulkanisate. Als Kieselsäuren können somit z.B. sowohl jene des Typs VN3 (Handelsname) der Firma Degussa als auch hochdispergierte Kieselsäuren sogenannte HD-Kieselsäuren (z.B. Ultrasil 7000 der Firma Degussa), zum Einsatz kommen.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmlschung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: - SCN, -SH, -NH2 oder -Sx- (mit x = 2-8). So können als Silan-Kupplungsagenzien z. B. 3-Mercaptopropyltriethoxysilan, 3-Thlocyanatopropyltrimethoxysilan oder 3,3'-Bis(triethoxyallylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruss (Handelsname X50S der Firma Degussa) zugesetzt werden. Auch geblockte Mercaptosilane, wie sie z. B. aus der WO 99/09036 bekannt sind, können als Silan-Kupplungsagens eingesetzt werden.

Die Kupplungsagenzien, bevorzugt Silan-Kupplungsreagenzien, werden in Mengen von 0,2 bis 30 phr, vorzugsweise 2 bis 20 phr, eingesetzt, da dann eine optimale Anbindung des Füllstoffes an den oder die Kautschuke erfolgen kann. Alternativ kann die Menge an Kupplungsreagenzien auf die Menge an Füllmittel in der Mischung bezogen werden (phf, parts per hundred parts filler). Hierbei liegt die bevorzugte Menge an Kupplungsreagenz, insbesondere an Silan-Kupplungsreagenz bei 5 bis 15 phf.

Die Kautschukmischung kann außerdem noch andere Füllstoffe, wie beispielsweise Aluminosilicate, Kreide, Stärke, Magnesiumoxid, Titandioxid oder Kautschukgele enthalten.

Erfindungsgemäß enthält die Kautschukmischung wenigstens ein flüssiges Polymer als Weichmacher, wie z.B. flüssiges Polybutadien, bevorzugt in Mengen von 0,1 bis 160 phr, wie 5 bis 75 phr, Insbesondere 10 bis 60 phr.

Bevorzugt wird als weiterer Weichmacher Mineralöl eingesetzt. Die Mineralöle werden bevorzugt in Mengen von 1 bis 160 phr, wie 5 bis 75 phr, insbesondere 10 bis 60 phr eingesetzt.

Die Kautschukmischung kann außer den genannten Substanzen noch andere Zusatzstoffe, wie z. B. MES (mild extraction solvate), RAE (residual aromatic extract) oder TDAE (treated distillate aromatic extract) aufweisen.

Des Weiteren kann die erfindungsgemäße Kautschukmischung übliche Zusatzstoffe in üblichen Gewichtsteilen enthalten. Zu diesen Zusatzstoffen zählen Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind.

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung andere vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger, wie z. B. Benzothiazyl-2-cyclohexylsulfenamid (CBS), Guanidinbeschleuniger, wie z. B. N,N'-Diphenylguanidin (DPG), Dithiocarbamatbeschleuniger, wie z. B. Zinkdibenzyldithiocarbamat, Disulfide. Die Beschleuniger können auch in Kombination miteinander eingesetzt werden, wobei sich synergistische Effekte ergeben können.

Des Weiteren liegen in der Kautschukmischung übliche Aktivatoren vor. Diese Aktivatoren können Zinkoxid und Fettsäuren oder Zinkseifen auf Basis von Zinkoxid und

Fettsäuren sein. Alternativ können Gemische aus Zinkoxid und Metallacrylat und/oder Metallmethacrylat eingesetzt werden. Diese werden bevorzugt in einer Menge von 0,1 bis 3,0 phr an Zinkoxid und in einer Menge von 0,1 bis 3,0 phr an Metallacrylat und/oder Metallmethacrylat eingesetzt.

Bei Verwendung von DPG sind insbesondere Im Hinblick auf einem bei der Produktion unkritischen Vulkanisationsverhalten Mischungen vorteilhaft, deren Gehalt an DPG folgender ist:

$$\text{(phr Silika} \times \text{BET Silika)/phr DPG} > 4500 \text{ und} < 7500.$$

In einer bevorzugten Ausführungsform enthält die Kautschukmischung die folgende Zusammensetzung:

    80 bis 100 phr funktionalisiertes SSBR und/oder ESBR,
    0 bis 20 phr polarer oder unpolarer Kautschuk außer SSBR und ESBR
    1 bis 200 phr Kieselsäure
    0 bis 80 phr Ruß
    1 bis 160 phr Weichmacher
    0,1 bis 160 phr flüssige Polymere
    1 bis 30 phr Silan-Kupplungsreagenz

Die Herstellung der erfindungsgemäßen Kautschukmischung erfolgt auf herkömmliche Art und Weise in zwei Stufen, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird, z.B. mit einem ineinander geführten Innenmischer, und im Anschluss durch Zugabe des Vulkanisationssystems die Fertigmischung auf einem tangierenden Mischer erzeugt wird. Anschließend wird die Mischung weiterverarbeitet, z.B. durch einen Extrusionsvorgang, und in die entsprechende Form gebracht. Bevorzugt wird die Mischung in die Form eines Laufstreifens gebracht. Ein so erzeugter Laufstreifenmischungsrohling wird bei der Herstellung des Reifenrohlings, Insbesondere Fahrzeugluftreifenrohlings, wie bekannt, aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden. Die auf diese Weise mit der erfindungsgemäßen Mischung hergestellten Reifen zeigen gute Eigenschaften.

Die Erfindung soll nun anhand von Vergleichs- und Ausführungsbeispielen, die in der Tabelle 1 zusammengefasst sind, näher erläutert werden.

Tabelle 1

| Verbindung | Eigenschaften | V1 | V2 | V3 | V4 | V5 | E1 |
|---|---|---|---|---|---|---|---|
| NR | | 30 | - | - | - | 10 | 10 |
| BR | | 30 | 50 | 50 | 50 | - | - |
| SSBR 1 - unfunktionalisiert | (25 sty, 63 vinyl, VSL5025) | 40 | 50 | - | - | - | - |
| SSBR 2 - unfunktionalisiert | (40 sty, 30 vinyl, DOW 6410) | - | - | 50 | - | - | - |
| SSBR 3 - polar-reaktiv funktionalisiert | (21 sty, 55 vinyl, JSR HPR350) | - | - | - | 50 | - | - |
| SSBR 4- polar-reaktiv funktionalisiert | (10 sty, 40 vinyl, JSR HPR340) | - | - | - | - | - | 90 |
| SSBR 5 - unfunktionalisiert | (15 sty, 30 vinyl, Nippon Zeon NS 112) | - | - | - | - | 90 | - |
| Ruß | N339 | 5 | 5 | 5 | 5 | 5 | 5 |
| Silica | ULTRASIL VN 3 GR, Evonik | 86 | 86 | 86 | 86 | 86 | 86 |
| Öl | MES | 25 | 25 | 25 | 25 | 25 | 25 |
| Antioxidanz | | 2 | 2 | 2 | 2 | 2 | 2 |
| Wachs | | 2 | 2 | 2 | 2 | 2 | 2 |
| Zinkoxid INDIRECT | | 3 | 3 | 3 | 3 | 3 | 3 |
| Stearinsäure | | 2 | 2 | 2 | 2 | 2 | 2 |
| TESPD | SILQUESTA-1589 SILANE | 8 | 8 | 8 | 8 | 8 | 8 |
| DPG | | 2 | 2 | 2 | 2 | 2 | 2 |
| CBS | | 2 | 2 | 2 | 2 | 2 | 2 |
| Schwefel | | 1,7 | 1,7 | 1,7 | 1,7 | 1,7 | 1,7 |

Die eingesetzte funktionalisierte SSBR Mischung ist eine polar reaktivierte SSBR Mischung, die eine Amino-Siloxan Funktionalisierung aufweist.

Die Mischungen zeigen weitestgehend gleiche Glasübergangstemperaturen auf.

In der Tabelle 2 sind die Werte für die untersuchten Eigenschaften dargestellt. Dabei sind die Werte als relative Werte bezogen auf die Mischung V1 dargestellt.

Tabelle 2

| Eigenschaften | V1 | V2 | V3 | V4 | V5 | E1 |
|---|---|---|---|---|---|---|
| Winterperformance | 100 | 98 | 90 | 100 | 98 | 100 |
| Trockenbremsen | 100 | 101 | 102 | 101 | 102 | 105 |
| Handlings | 100 | 102 | 102 | 102 | 103 | 105 |
| ABS-Nassbremsen | 100 | 96 | 104 | 94 | 99 | 102 |
| Abrieb | 100 | 120 | 110 | 130 | 115 | 130 |

Die oben genannten Bewertungen erfolgten durch Reifentestes mit 205/55R16 ContiWinterContact TS810 Reifen mit entsprechenden Kautschukmischungen für den Laufstreifen. Alle Ergebnisse sind als relative Bewertung mit einer Basis von 100% für den Reifen V1 angegeben. Werte über 100% sind dem Vergleichsreifen V1 überlegen und stellen eine Verbesserung dar.

Die Winterperformance wurde als Schneetraktion, also als Beschleunigungsvermögen beim Anfahren im 1. Gang in m/sec$^2$ bestimmt. Das Trockenbremsen ist der Bremsweg aus einer Geschwindigkeit von 100 km/h.

Das Handling ergibt sich aus der Bewertung des Testfahrers. Das ABS-Nassbremsverhalten wurde bestimmt durch den Bremsweg aus 80 km/h bei nasser Fahrbahn. Schließlich stellen die Werte für den Abrieb den Gewichtsverlust des Reifens nach 10.000 gefahrenen Kilometern dar.

Alle Untersuchungen wurden mit einem Audi A4 Fahrzeug durchgeführt.

Überraschenderweise zeigte sich, dass bei Mischungen mit > 80 phr SSBR, siehe E1 mit 90 phr SSBR und 10 phr NR, eine herausragende Gesamtperformance in den zentralen Reifeneigenschaften Trockenbremsen, Rollwiderstand, Handling, Nassbremsen und Abrieb ohne negativen Einfluss auf die Wintereigenschaften zeigt. die Funktionalisierung des SSBR keinen negativen Einfluss auf die Nassbremseigenschaften und Trockenbremseigenschaften sowie der Winterperformance aufzeigt.

**Patentansprüche**

1. Vernetzbare Kautschukmischung, insbesondere für Reifen, enthaltend: 80 bis 100 phr funktionalisierten SSBR und/ oder ESBR Dienkautschuk, 0 bis 20 phr weiteren polaren oder unpolaren Kautschuk und wenigstens ein flüssiges Polymer und zumindest einen polaren Füllstoff.

2. Kautschukmischung nach Anspruch 1, **dadurch gekennzeichnet, dass** im SSBR und/oder ESBR Styrol in einem Anteil von 10 bis 50 Gew.-% enthalten ist und mit einem Vinylgehalt von 10 bis 80 Gew.-%, jeweils bezogen auf das gesamte Polymer.

3. Kautschukmischung nach zumindest einem der Ansprüche 1 oder 2, wobei die Funktionalisierung eine Funktionalisierung mit einer polaren und/ oder polar-reaktiven Gruppe ist.

4. Kautschukmischung nach zumindest einem der vorherigen Ansprüche, wobei die Funktionalisierung eine Funktionalisierung mit Hydroxylgruppen und/oder Epoxidgruppen und/oder Siloxangruppen und/oder Aminogruppen und/ oder Aminosiloxangruppen und/oder Carboxylgruppen ist.

5. Kautschukmischung nach zumindest einem der vorherigen Ansprüche, wobei der polare oder unpolare Kautschuk ausgewählt ist aus der Gruppe bestehend aus Naturkautschuk, synthetischem Polyisopren, Polybutadien, Propylen-Ethylen-Kautschuk, Ethylen-Propylen-Dien-Kautschuk, Halobutylkautschuk, Chloroprenkautschuk, Iaopren-Butadien-Kautschuk und/oder Styrol-Isopren-Butadien-Terpolymer.

6. Kautschukmischung nach zumindest einem der vorherigen Ansprüche, wobei diese als polaren Füllstoff Kieselsäure enthält.

7. Kautschukmischung nach zumindest einem der vorhergehenden Ansprüche, wobei der polare Füllstoff in einer Menge von 0,1 phr bis 160 phr vorhanden ist.

8. Kautschukmischung nach zumindest einem der vorherigen Ansprüche, wobei diese weiterhin Russ in einer Menge von ≥0,1 phr enthält.

9. Kautschukmischung nach zumindest einem der vorherigen Ansprüche, wobei das flüssige Polymer ein flüssiges Polybutadien ist.

10. Kautschukmischung nach zumindest einem der vorherigen Ansprüche, wobei diese weiterhin Weichmacher, bevorzugt wenigstens ein Mineralöl, enthält.

11. Kautschukmischung nach zumindest einem der vorherigen Ansprüche, wobei diese weiterhin ein Kupplungsreagenz enthält.

12. Kautschukmischung nach Anspruch 11, wobei das Kupplungsreagenz ein Silan-Kupplungsreagenz ist.

**13.** Kautschukmischung zumindest nach einem der vorherigen Ansprüche, wobei N,N'-Diphenylguanidin als Beschleuniger eingesetzt wird.

**14.** Kautschukmischung nach Anspruch 13, wobei das Verhältnis an Silika zu N,N'-Diphenylguanidin der folgenden Formel genügt:

$$(\text{phr Silika} \times \text{BET Silika})/\text{phr DPG} > 4500 \text{ und} < 7500.$$

**15.** Kautschukmischung nach zumindest einem der vorherigen Ansprüche, **dadurch gekennzeichnet, dass** sie

80 bis 100 phr funktionalisierten SSBR und/oder ESBR Dienkautschauk,
0 bis 20 phr weiteren polaren oder unpolaren Kautschuk,
1 bis 200 phr Kieselsäure,
0 bis 80 phr Russ,
1 bis 160 phr Weichmacher,
0,1 bis 160 phr flüssige Polymere, und
1 bis 30 phr Silan-Kupplungsagenz enthält.

**16.** Reifen zumindest zum Teil aus einer vulkanisierten Kautschukmischung nach zumindest einem der Ansprüche 1 bis 15.

**17.** Gummiartikel zumindest teilweise hergestellt aus einer vulkanisierten Kautschukmischung nach zumindest einem der Ansprüche 1 bis 15.

**Claims**

**1.** Crosslinkable rubber mixture, in particular for tyres, comprising: from 80 to 100 phr of functionalized SSBR and/or ESBR diene rubber, from 0 to 20 phr of other polar or non-polar rubber and at least one liquid polymer and at least one polar filler.

**2.** Rubber mixture according to Claim 1, **characterized in that** the proportion of styrene in the SSBR and/or ESBR is from 10 to 50% by weight and the vinyl content is from 10 to 80% by weight, based in each case on the entire polymer.

**3.** Rubber mixture according to at least one of Claims 1 and 2, where the functionalization is functionalization with a polar and/or polar reactive group.

**4.** Rubber mixture according to at least one of the preceding claims, where the functionalization is functionalization with hydroxy groups, and/or epoxy groups, and/or siloxane groups, and/or amino groups, and/or aminosiloxane groups and/or carboxy groups.

**5.** Rubber mixture according to at least one of the preceding claims, where the polar or non-polar rubber has been selected from the group consisting of natural rubber, synthetic polyisoprene, polybutadiene, propylene-ethylene rubber, ethylene-propylene-diene rubber, halobutyl rubber, chloroprene rubber, isoprene-butadiene rubber and/or styrene-isoprene-butadiene terpolymer.

**6.** Rubber mixture according to at least one of the preceding claims, where this comprises silica as polar filler.

**7.** Rubber mixture according to at least one of the preceding claims, where the amount present of the polar filler is from 0.1 phr to 160 phr.

**8.** Rubber mixture according to at least one of the preceding claims, where this also comprises an amount of $\geq 0.1$ phr of carbon black.

**9.** Rubber mixture according to at least one of the preceding claims, where the liquid polymer is a liquid polybutadiene.

10. Rubber mixture according to at least one of the preceding claims, where this also comprises plasticizer, preferably at least one mineral oil.

11. Rubber mixture according to at least one of the preceding claims, where this also comprises a coupling reagent.

12. Rubber mixture according to Claim 11, where the coupling reagent is a silane coupling reagent.

13. Rubber mixture at least according to any of the preceding claims, where N,N'-diphenylguanidine is used as accelerator.

14. Rubber mixture according to Claim 13, where the ratio of silica to N,N'-diphenylguanidine complies with the following formula:

```
(phr silica × BET silica)/phr DPG > 4500 and < 7500.
```

15. Rubber mixture according to at least one of the preceding claims, **characterized in that** it comprises from 80 to 100 phr of functionalized SSBR and/or ESBR diene rubber,
from 0 to 20 phr of other polar or non-polar rubber,
from 1 to 200 phr of silica,
from 0 to 80 phr of carbon black,
from 1 to 160 phr of plasticizer,
from 0.1 to 160 phr of liquid polymers, and
from 1 to 30 phr of silane coupling reagent.

16. Tyre at least to some extent made of a vulcanized rubber mixture according to at least one of Claims 1 to 15.

17. Rubber item at least to some extent produced from a vulcanized rubber mixture according to at least one of Claims 1 to 15.

**Revendications**

1. Mélange de caoutchouc réticulable, notamment pour pneus, contenant: 80 à 100 phr d'un caoutchouc diène SSBR et/ou ESBR fonctionnalisé, 0 à 20 phr d'un caoutchouc polaire ou non polaire supplémentaire et au moins un polymère liquide et au moins une charge polaire.

2. Mélange de caoutchouc selon la revendication 1, **caractérisé en ce que** du styrène est contenu dans le SSBR et/ou ESBR en une proportion de 10 à 50 % en poids, et avec une teneur en vinyle de 10 à 80 % en poids, à chaque fois par rapport à la totalité du polymère.

3. Mélange de caoutchouc selon au moins l'une quelconque des revendications 1 ou 2, dans lequel la fonctionnalisation est une fonctionnalisation avec un groupe polaire et/ou polaire réactif.

4. Mélange de caoutchouc selon au moins l'une quelconque des revendications précédentes, dans lequel la fonctionnalisation est une fonctionnalisation avec des groupes hydroxyle et/ou des groupes époxyde et/ou des groupes siloxane et/ou des groupes amino et/ou des groupes aminosiloxane et/ou des groupes carboxyle.

5. Mélange de caoutchouc selon au moins l'une quelconque des revendications précédentes, dans lequel le caoutchouc polaire ou non polaire est choisi dans le groupe constitué par le caoutchouc naturel, le polyisoprène synthétique, le polybutadiène, le caoutchouc de propylène-éthylène, le caoutchouc d'éthylène-propylène-diène, le caoutchouc d'halogénobutyle, le caoutchouc de chloroprène, le caoutchouc d'isoprène-butadiène et/ou le terpolymère styrène-isoprène-butadiène.

6. Mélange de caoutchouc selon au moins l'une quelconque des revendications précédentes, dans lequel celui-ci contient de la silice en tant que charge polaire.

**7.** Mélange de caoutchouc selon au moins l'une quelconque des revendications précédentes, dans lequel la charge polaire est présente en une quantité de 0,1 phr à 160 phr.

**8.** Mélange de caoutchouc selon au moins l'une quelconque des revendications précédentes, dans lequel celui-ci contient également de la suie en une quantité $\geq$ 0,1 phr.

**9.** Mélange de caoutchouc selon au moins l'une quelconque des revendications précédentes, dans lequel le polymère liquide est un polybutadiène liquide.

**10.** Mélange de caoutchouc selon au moins l'une quelconque des revendications précédentes, dans lequel celui-ci contient également un plastifiant, de préférence au moins une huile minérale.

**11.** Mélange de caoutchouc selon au moins l'une quelconque des revendications précédentes, dans lequel celui-ci contient également un réactif de couplage.

**12.** Mélange de caoutchouc selon la revendication 11, dans lequel le réactif de couplage est un réactif de couplage silane.

**13.** Mélange de caoutchouc selon au moins l'une quelconque des revendications précédentes, dans lequel la N,N'-diphénylguanidine est utilisée en tant qu'accélérateur.

**14.** Mélange de caoutchouc selon la revendication 13, dans lequel le rapport entre la silice et la N,N'-diphénylguanidine satisfait la formule suivante:

```
(phr silice x BET silice)/phr DPG > 4 500 et < 7 500.
```

**15.** Mélange de caoutchouc selon au moins l'une quelconque des revendications précédentes, **caractérisé en ce qu'**il contient
80 à 100 phr d'un caoutchouc diène SSBR et/ou ESBR fonctionnalisé,
0 à 20 phr d'un caoutchouc polaire ou non polaire supplémentaire,
1 à 200 phr de silice,
0 à 80 phr de suie,
1 à 160 phr d'un plastifiant,
0,1 à 160 phr de polymères liquides et
1 à 30 phr d'un agent de couplage silane.

**16.** Pneu constitué au moins en partie d'un mélange de caoutchouc vulcanisé selon au moins l'une quelconque des revendications 1 à 15.

**17.** Article en caoutchouc fabriqué au moins en partie à partir d'un mélange de caoutchouc vulcanisé selon au moins l'une quelconque des revendications 1 à 15.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040054062 A1
- EP 1052270 A
- DE 3804908
- EP 1529806 A
- EP 1035164 A
- EP 1837370 A
- EP 1457501 A
- EP 1854839 A

- WO 20070322 A
- EP 763564 A
- WO 2007134895 A
- EP 1334985 A
- EP 0890587 A
- EP 1834966 A
- EP 1792892 A
- WO 9909036 A

**In der Beschreibung aufgeführte Nicht-Patentliteratur**

- **J. Schnetger.** Lexikon der Kautschuktechnik. Hüthig Buch Verlag, 1991, 42-48